(19) Europäisches Patentamt

European Patent Office

Office européen des brevets

(11) **EP 0 634 962 B1**

## (12) EUROPEAN PATENT SPECIFICATION

(45) Date of publication and mention
of the grant of the patent:
**03.06.1998 Bulletin 1998/23**

(21) Application number: **93909111.2**

(22) Date of filing: **06.04.1993**

(51) Int. Cl.$^6$: **B22D 27/04**, B22D 27/20,
C21C 1/10

(86) International application number:
**PCT/SE93/00297**

(87) International publication number:
**WO 93/20969 (28.10.1993 Gazette 1993/26)**

(54) **A METHOD OF MANUFACTURING CAST PRODUCTS WHICH ARE CAST IN A SINGLE-PIECE STRUCTURE HAVING AN INHOMOGENEOUS GRAPHITE STRUCTURE**

VERFAHREN ZUR HERSTELLUNG VON GUSSSTÜCKEN DIE AN EINEM STÜCK MIT INHOMOGENER GRAPHITSTRUKTUR GEGOSSEN WERDEN

PROCEDE DE FABRICATION DE PRODUITS MOULES MONOBLOCS POSSEDANT UNE STRUCTURE GRAPHITIQUE NON HOMOGENE

(84) Designated Contracting States:
**DE ES FR GB IT SE**

(30) Priority: **09.04.1992 SE 9201140**

(43) Date of publication of application:
**25.01.1995 Bulletin 1995/04**

(73) Proprietor: **SinterCast AB**
**100 55 Stockholm (SE)**

(72) Inventor: **BÄCKERUD, Stig Lennart**
**S-641 30 Katrineholm (SE)**

(74) Representative:
**Ekelöf, Carl Herman**
**Albihns Patentbyra Stockholm AB**
**P.O.Box 3137**
**103 62 Stockholm (SE)**

(56) References cited:
**WO-A-89/04224          WO-A-91/13176**
**WO-A-92/06809          SE-B-   306 809**
**SE-B-   322 022          SE-B-   372 902**
**US-A- 4 501 612**

• **SAE Handbook, Vol.3, 1986, p24.70-24.71**
• **SAE Handbook, Vol.3, 1986, p.24.70-24.71**

## Description

The present invention relates to a method of manufacturing cast products which are cast as a one-piece structure having controlled inhomogeneous graphite structure. According to the invention, the products can be cast in a manner to obtain, for instance, a vermicular graphite structure in certain parts thereof and a nodular graphite structure in other parts thereof, therewith imparting to the cast product different properties in different parts of said product.

Compacted graphite iron or cast iron having a vermicular graphite structure is an intermediate form between gray cast iron having a flaky graphite structure and ductile iron having a nodular graphite structure.

Compacted graphite cast iron possesses desirable and unique properties, which include good mechanical and physical properties and good machinability, which makes the material highly suitable for a number of mechanical components in machine constructions. This includes machine constructions that are manufactured in large numbers, chiefly engines and, for instance, pumps particularly for motor vehicles. Iron-dependent, highly qualified materials and machining methods are not normally used for specialty products, such as aircraft engines, and when particularly high demands are placed on the products, and the manufacture of such products therefore lies outside the scope of the present invention.

Compacted graphite iron will thus contain graphite that has precipitated in the form of vermicular graphite and is defined according to ISO/R 945-1969(E) as "Form III"- graphite or "Type IV"-graphite in accordance with ASTM A 247. The graphite form was first described in England (1948) and has since been used for the manufacture of special components on a small scale. The reason for this small scale of manufacture is because it has not been possible to control the properties and composition of the iron melts with sufficient accuracy to guarantee the composition and graphite structure of the cast product with sufficient reproducibility.

The properties of compacted graphite iron lie somewhere between the properties of gray iron and ductile iron. For instance, the elasticity module of compacted graphite iron is from 30-40% higher than the elasticity module of gray iron, which means that the elasticity module of compacted graphite iron is almost the same as that of ductile iron. Compacted graphite cast iron has a ductility which is higher than that of gray iron, often more than ten times higher than that of gray iron, and has a much higher tensile strength, in the order of twice the tensile strength of gray iron. The fatigue strength of compacted graphite iron is 100% higher than that of gray iron, and essentially in the same order of magnitude as that of ductile iron. The thermal conductivity of compacted graphite iron is of the same order of magnitude as that of gray iron, and much higher than that of ductile iron.

It will be seen, therefore, that good reasons are found for using compacted graphite cast iron in machine constructions where good strength requirements are combined with requirements of high thermal conductivity. Due to the difficulties experienced in obtaining compacted graphite cast iron in a reproducible manner, it has not earlier been possible to manufacture cast products in this type of cast iron.

In WO-A1-89/04224 (PCT/US88/03693) is shown a method to control radial solidification of cast turbine wheal to obtain a fine grain structure in a hub portion and a directional solidified grain structure in an integral blade portion. This is obtained by heating elements around parts of the mold and cooling elements in the mold.

US-A-4 501 612 teaches a method to produce compacted graphite cast iron - which corresponds to vermicular graphite- by adding aluminium to the cast iron melt, in order that the compacted graphite cast iron consists essentially of about 0,5 to 7% by weight of aluminium.

However, it is possible to determine the concentration of nucleants and modifying agents of a melt, by analyzing temperature data in relation to time obtained with the aid of temperature sensors during solidification of sample volumes taken from the melt concerned. This enables the manner in which the melt will solidify in a mould to be determined accurately, and also enables the content of inoculating agent and modification agent to be corrected in a manner to impart desired properties to the cast product. See SE-B-8404579-8 or US-A-4,667,725 in this respect. According to these patent specifications, the aforesaid values are measured with the aid of two temperature sensors placed in a sample bath in which the melt is in thermodynamical equilibrium with the temperature of the sample vessel at the start of the solidification process.

One of these temperature sensors is placed in the centre of the melt in the sample vessel while the other sensor is placed in the melt in the proximity of the vessel wall. During the solidification process, there are recorded values concerning undercooling of the melt at the vessel wall ($T^*_w$), recalescence at the vessel wall ($rec_w$), the positive difference between the temperature at the vessel wall and at the vessel center, ($\Delta T+$), and the derivative of the temperature at the vessel wall and at the vessel centre $\frac{dT}{d\tau}_w$, at constant equivalent growth temperatures $\frac{dT}{d\tau}_c = 0$, with the aid of which in relation to known reference values for analogous sampling conditions, the presence of and the amount of crystallization nucleants and the amount of structure modifying agent can be determined and corrected by additions to the melt or by introducing residence times so that the amounts of crystallization nucleants and structure modifying agents present will correspond to the amounts required to obtain the desired graphite structure in the cast product.

The structure modifying additives normally consist of magnesium optionally together with rare earth metals, particularly cerium.

When the amount of dissolved, active magnesium, and therewith equivalent amounts of other structure modifying agents, i.e. the amount of such elements present in solution subsequent to having separated oxides and sulfides thereof in solid form, reaches about 0.035% or more, graphite will precipitate in nodular form when the melt solidifies. If the aforesaid content falls to about 0.015%, the graphite will precipitate as vermicular graphite, while if the aforesaid contents fall still further to beneath about 0.008%, the graphite will precipitate as flaky graphite and the cast iron will solidify as gray cast iron. It will be evident from this that between values of about 0.010 and 0.025%, chiefly vermicular graphite or compacted graphite cast iron will be formed. It has not been possible to produce reproducible compacted graphite cast iron in series manufacture prior to the aforesaid patent specifications.

The invention will now be described in more detail with reference to exemplifying embodiments thereof and also with reference to the accompanying drawing, in which

Figure 1 illustrates curves for changing the structure of the graphite crystals with various quantities of dissolved, active magnesium and the local enrichment of nucleating substances; the various curves represent different cooling rates and different local variations of nucleating substances respectively;

Figure 2 illustrates a conventional flywheel; and

Figure 3 illustrates a flywheel constructed and manufactured in accordance with the present invention.

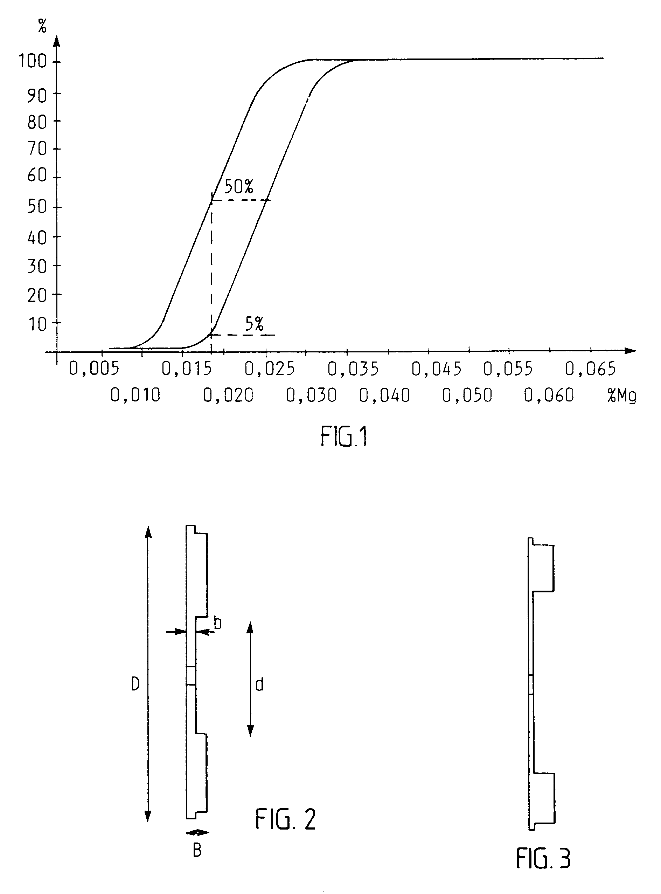

In addition to the amount of structure modifying substances present (expressed as the percentage of dissolved magnesium), the amount of nucleating points and the prevailing solidification rate also play important parts in the structure formation. This is demonstrated in Figure 1, in which the bottom curve shows how the nodularity of the graphite crystals changes (0% corresponds to a complete vermicular cast iron, whereas 100% corresponds to a complete nodular iron, i.e. a ductile iron). When the number of nucleating particles increases and/or the solidification rate increases, the curve is displaced upwards and to the left in the diagram.

Consequently, if the number of nucleating particles and/or the solidification rates vary locally in a mould, the cast material will exhibit different structures and therewith different properties. In accordance with the present invention, the structure, and consequently the properties, desirable in different parts of a cast product can be controlled intentionally, by suitable selection of nucleating additions and/or suitable selection of the solidification conditions.

It is also possible to draw a curve representing the amount of graphite precipitated in the form of nodules in relation to the amount of dissolved, active magnesium in the melt. It has now also been found possible to draw similar curves in which the solidification rates have been taken into account, for instance given in $Ks^{-1}$. Different curves for different solidification rates are obtained when the S-shaped curve is moved to the left at higher solidification rates. As before mentioned, the Figure 1 diagram includes curves of which curve I motivates a solidification rate of $1\ Ks^{-1}$ and curve II motivates a solidification rate of $5\ Ks^{-1}$. Thus, when casting a melt that contains 0.018% of active, dissolved magnesium in a mould and therewith ensure that the mould cavity, and therewith the cast product, has such a dimension, or cooling bodies or heat absorbing media are provided for cooling the mould such that the cooling rate will be, e.g., $5\ Ks^{-1}$, the cast product will solidify with 50% nodular graphite in these parts of the product. If other parts of the same cast product solidify at a rate of $1\ Ks^{-1}$, the resultant graphite structure will be essentially vermicular with about 5% nodular graphite. This enables cast products to be produced with an inhomogeneous graphite structure in different parts of the product. For instance, if the area of the product which is to contain a ductile structure is cooled rapidly, for instance at a solidification rate of $5\ Ks^{-1}$, there will be obtained a structure containing about 50% nodular graphite in the case illustrated in Figure 1 with an active, dissolved magnesium content of 0.018%, and thus a greater mechanical strength but lower thermal conductivity than those parts of the cast product which solidify at a rate of $1\ Ks^{-1}$, where the nodular graphite content is only about 5% and the predominant part of the graphite is present in vermicular form. This result can be achieved when heat is transported away from the molten metal in the mould at different quantities per unit of time, either by making thinner those parts that are to solidify with nodular graphite, or providing said parts with closely lying heat-absorbing or heat-transporting means, such as cooling elements or cooling coils.

It is well known to one skilled in foundry techniques to place cooling loops and cooling elements in foundry moulds. However, as far as Applicant is aware, the provision of such cooling loops and cooling elements has in most cases been undertaken with the intention of improving the filling possibilities in a given casting process and to reduce the cooling rate in thinner sections and to increase the cooling rate in thicker sections. In principle, this is opposed to the inventive concept and would tend to lead the skilled person away from the inventive concept rather than towards said concept.

A flywheel coupled to the engine of an automotive vehicle can be mentioned as one example of a product manufactured in accordance with the inventive method. A flywheel consists of a rotatable disc having a hub which is connected to the crank-shaft and which rotates together therewith. When the clutch is engaged, the engine torque is transferred to the drive shaft through the medium of a clutch disc and the clutch drive plate, the vehicle being driven by the drive shaft through the gearbox. When the vehicle is started, and often while the vehicle is being driven, the driving force is disengaged, by lifting the clutch drive plate away from the flywheel, and is then reengaged during slipping of the clutch. The mechanical work occurring as a result of the frictional forces generated by these two mechanical components is therewith converted to thermal energy which must be transported away from the periphery of the flywheel. At the same time, the whole of the engine force is transferred to the clutch drive plate through the hub of the flywheel, and consequently the flywheel must have a high degree of mechanical strength and a high modulus of elasticity, particularly at the hub of the flywheel.

Because of the thermal conductivity demanded of flywheels, flywheels are normally constructed from gray iron or are composed of different materials. This requires the flywheel either to be overdimensioned particularly in the hub part of the flywheel, for safety reasons. Gray iron also has a low dimension stability. In the case of a structure composed of different materials, it is possible, of course, to optimize the properties, although this solution makes manufacture more expensive. Consequently, it is desirable to mould a flywheel where the frictional surface on the flywheel periphery consists to at least about 80% of compacted graphite cast iron, and therewith ≤ 20% ductile or nodular iron. These values correspond to a proposed standard in which material present in the frictional surface will have the desired high thermal conductivity while also having a high wear resistance at the same time. The graphite structure in the hub part of the flywheel is more than 50% nodular, thus a material similar to ductile iron, which provides high mechanical strength and high rigidity in comparison with other types of cast iron. The thickness of the hub part of the flywheel can be reduced by half when passing from gray iron to ductile iron. When passing from a material containing at least 80% compacted graphite in the wear disc, practically the same thermal conductivity is obtained as that of gray iron, although mechanical strength and rigidity, or stiffness, will increase greatly. It is known to manufacture flywheels totally from compacted graphite cast iron. Although these flywheels are superior to flywheels made from gray cast iron, it is not possible to achieve the substantial savings in material obtained when practicing the present invention.

By moving the mass radially outwards, it is possible to maintain the same moment of inertia of the flywheel at lower total weights, which is, of course, one of the main purposes.

Figure 2 illustrates a flywheel manufactured from gray iron, and Figure 3 illustrates a flywheel manufactured with an inhomogeneous graphite structure, i.e. with compacted graphite cast iron in the outer part of the flywheel and with a "ductile iron" structure in the hub part thereof. Dimensions are set forth in the Table below.

Table I

|   | Fig. 2 | Fig. 3 |
|---|---|---|
| D | 350 | 350 |
| d | 139 | 220 |
| B | 25 | 30 |
| b | 12 | 6 |

When casting the flywheel, cooling of the thin section at the hub, about 6 mm, will normally be sufficient for the solidification rate to result in the formation of more than 50% nodular graphite, the flywheel being cast in conventional sand moulds. Naturally, cooling will depend on the configuration of the mould. However, if the decrease in temperature is unsatisfactory, cooling bodies may be placed close to the hub part of the sand mould when preparing said mould, so that the heating leaving the casting is absorbed more rapidly.

The present invention can also be applied in the casting of a cylinder block in a casting operation which includes the provision of an inhomogeneous graphite structure.

An cylinder block is an example of a mechanical component or product which is subjected to large numbers of different stresses and strains. For instance, the cylinders of an engine are normally placed in the upper part of the cylinder block and subjected to particular thermal stresses. Combustion takes place in the cylinders located in the upper part of the cylinder block, where very large differences in temperature occur. The working temperature is normally relatively high in this part of the engine. Subsequent to being cast, this part of the cylinder block is worked quite considerably before it can be installed in a finished engine. Thus, the workability of this part of the cylinder block is an essential property of the block. Other properties required of the block are good thermal conductivity, high dimension stability and stiffness. All of these requirements are best fulfilled by compacted graphite cast iron.

The lower parts of the cylinder block normally house the crankshaft and engine attachment devices, which primarily shall exhibit good machinability, high damping ability and satisfactory stiffness. It will be evident that compacted graphite cast iron is the optimal material for such engine components. Located between the upper and the lower parts of a cylinder block is a part which has relatively thin walls and the most important property of which is high mechanical strength. This part may suitably be comprised of ductile iron or at least a cast iron that contains a high proportion of nodular graphite. Ductile iron which becomes very hot, for instance due to its poor thermal conductivity, will readily loose its dimension stability and cannot be readily worked. The aforesaid intermediate part of the cylinder block is not subjected to thermal influences to the same extent as the remaining parts of the block, although the mechanical strength requirement of this intermediate part is greater than in the case of said remaining parts. These parts are not normally machined. A "ductile iron structure" is therefore an optimal structure in these regions.

It will be evident from the aforegoing that the inventive method will enable, for instance, an engine block of optimal structure to be produced. In this case, there is provided suitable cooling of those parts of the final cast product, or the cylinder block, which obtains an optimal structure having a high percentage of nodular graphite precipitation or favours nodular-formation by local introduction of nucleating substances.

Nucleating substances can be introduced locally by supplying nucleating substances to the mould interior at those locations where a higher quantity of nodular solidification is desired. This can be achieved, for instance, by injecting a slurry of fine-grain ferro silicone onto said parts of the inner surface of the mould prior to the casting process.

Naturally, the present invention is not restricted to the exemplifying embodiments thereof described with reference to flywheel and cylinder block manufacture.

For instance, the inventive method can be applied equally as well to the manufacture of brake discs and other engine components which can be produced from cast iron having an inhomogeneous graphite structure.

Vehicle manufacture constitutes a main area within which the invention can be applied, because savings in weight have a particular significance in this field. It has been calculated that a weight saving in the order of 30% can be achieved when using compacted graphite cast iron in a cylinder block in comparison with the use of gray cast iron, without reducing engine power.

When an engine is constructed for manufacture in accordance with the present method, further savings in weight can be made.

## Claims

1. A method for the manufacture of single-piece cast iron products having an inhomogeneous distribution of the graphite crystals in vermicular and nodular form in different parts of the finished cast product, **characterized** by adjusting the composition and physical properties of the melt or the local nucleating potential so that, in dependence on solidification time and/or the local nucleating potential, the melt will solidify with a larger proportion of vermicular graphite crystals and a correspondingly smaller proportion of nodular graphite crystals in those parts of the casting in which a vermicular graphite structure is desired; and by ensuring in parts in which a higher proportion of nodular graphite crystals is desired by adjusting the local nucleation potential that heat is rapidly transported away from the casting during solidification, either by forming said casting parts with thin sections or by providing the mould with heat-absorbing elements such that the mould temperature in said parts can be lowered for a sufficiently short time period to obtain the desired degree of nodularity.

2. A method according to Claim 1, **characterized** by adjusting the composition and physical properties of the melt so that the content of a modifying agent will be equivalent to a content of 0.010-0.025 active, dissolved magnesium or a corresponding content of some other modifying agent.

3. A method according to Claim 1 and 2, **characterized** by configuring the cast product such that where a predominant nodular graphite structure is desired cooling in the region of 1,150-1,000°C is at least 5 Ks$^{-1}$ or higher, and is $\leq 1$ Ks$^{-1}$ in the region where a vermicular graphite structure is desired.

4. A method according to any of claims 1-3 for manufacturing a flywheel for engaging a brake disc in the disc brakes of an automotive vehicle, such as a car, truck, bus or railway carriage, **characterized** in that the ratio between the thickness in the frictional parts and the flywheel hub is greater than 3, preferably 5.

5. A flywheel manufactured in accordance with the method of Claims 1-4, **characterized** in that the flywheel is cast in a sand mould with a melt that contains 0.010-0.025 active dissolved magnesium or equivalent amounts of some other modifying agent, and with a thickness in the hub parts of the flywheel of between 4 and 8 mm and a thickness of 25-35 mm in outer parts of the flywheel having surfaces for contact with clutch discs.

## Patentansprüche

1. Verfahren zum Herstellen von einstückigen Gußeisenprodukten mit einer inhomogenen Verteilung der Graphitkristalle in Vermikularform und Kugelform in unterschiedlichen Teilen des fertigen Gießproduktes, **gekennzeichnet durch** das Einstellen der Zusammensetzung und der physikalischen Eigenschaften der Schmelze oder des lokalen Kristallisationspotentials derart, daß die Schmelze in Abhängigkeit von der Erstarrungszeit und/oder dem lokalen Kristallisationspotential mit einem größeren Anteil an Vermikulargraphitkristallen und einem entsprechend kleineren Anteil an Kugelgraphitkristallen in den Teilen des Gusses erstarren wird, in denen eine Vermikulargraphitstruktur erwünscht ist; und durch das Sicherstellen in den Teilen, in denen ein höherer Anteil an Kugelgraphitkristallen erwünscht ist, daß durch Einstellen des lokalen Kristallisationspotentials während des Erstarrens Wärme schnell von dem Guß weg transportiert wird, entweder durch Ausbilden der Gußteile mit dünnen Abschnitten oder durch Versehen der Form mit wärmeabsorbierenden Elementen, so daß die Formtemperatur in besagten Teilen für einen ausreichend kurzen Zeitabschnitt gesenkt werden kann, um den gewünschten Grad an Kugeligkeit zu erreichen.

2. Verfahren nach Anspruch 1, **gekennzeichnet durch** das Einstellen der Zusammensetzung und der physikalischen Eigenschaften der Schmelze derart, daß der Inhalt an einem Umwandlungszusatz äquivalent zu einem Inhalt an 0,010-0,025 aktivem, gelösten Magnesium oder einem entsprechenden Inhalt an irgendeinem anderen Umwandlungszusatz ist.

3. Verfahren nach Anspruch 1 und 2, **gekennzeichnet durch** das Konfigurieren des Gießproduktes derart, daß dort, wo eine hauptsächlich kugelige Graphitstruktur erwünscht ist, das Kühlen in dem Gebiet von 1.150-1.000°C zumindest 5 Ks$^{-1}$ oder mehr beträgt, und in dem Gebiet ≤ 1 Ks$^{-1}$ beträgt, wo eine vermikulare Graphitstruktur erwünscht ist.

4. Verfahren nach mindestens einem der Ansprüche 1-3 zum Herstellen eines Schwungrades zum Eingreifen mit einer Bremsscheibe in einer Scheibenbremse eines Kraftfahrzeuges, wie ein Personenkraftwagen, Lastkraftwagen, Bus, oder Schienenwagen, **dadurch gekennzeichnet, daß** das Verhältnis zwischen der Dicke in den Reibteilen und der Schwungradnabe größer als 3, vorzugsweise 5 ist.

5. Schwungrad, hergestellt nach dem Verfahren der Ansprüche 1-4, **dadurch gekennzeichnet, daß** das Schwungrad in einer Sandform gegossen wird, mit einer Schmelze, die 0,010-0,025 aktives gelöstes Magnesium oder äquivalente Mengen an irgendeinem anderen Umwandlungszusatz enthält, und mit einer Dicke in den Nabenteilen des Schwungrades von zwischen 4 mm und 8 mm und einer Dicke von 25-35 mm in äußeren Teilen des Schwungrades, die Flächen zur Berührung mit Kupplungsscheiben aufweisen.

**Revendications**

1. Procédé de fabrication de produits moulés monoblocs, en fonte, présentant une distribution non homogène des cristaux de graphite sous forme vermiculaire et sous forme nodulaire dans différentes parties du produit moulé fini, caractérisé par le fait d'ajuster la composition et les propriétés physiques du métal en fusion ou du potentiel local de nucléation pour que, en fonction du temps de solidification et/ou du potentiel local de nucléation, le métal en fusion se solidifie avec une plus grande proportion de cristaux de graphite vermiculaires et une proportion correspondante plus faible de cristaux de graphite nodulaires dans les parties de la pièce où est souhaitée une structure de graphite vermiculaire, et par le fait de garantir que, dans les parties où on souhaite une plus forte proportion de cristaux de graphite nodulaire par ajustement du potentiel local de nucléation. La chaleur est rapidement évacuée de la pièce moulée pendant la solidification, soit en dotant lesdites parties de la pièce moulée de sections minces, soit en dotant le moule d'éléments d'absorption de la chaleur de telle sorte que la température du moule dans ces parties puisse être abaissée en un laps de temps suffisamment court pour obtenir le degré souhaité de nodularité.

2. Procédé selon la revendication 1, caractérisé par un ajustement de la composition et des propriétés physiques du métal en fusion de telle sorte que la quantité d'agent modifiant soit équivalente à une quantité de 0,010 à 0,025 de magnésium actif dissout ou à une quantité correspondante d'un quelconque autre agent modifiant.

3. Procédé selon la revendication 1 et 2, caractérisé par le fait de configurer le produit moulé pour que, là où on souhaite une structure prédominante de graphite nodulaire, le refroidissement dans la région de 1150 à 1000°C soit d'au moins 5 Ks$^{-1}$ ou plus, et soit ≤ 1 Ks$^{-1}$ dans la région où on souhaite une structure de graphite vermiculaire.

4. Procédé selon l'une quelconque des revendications 1 à 3, servant à fabriquer un volant destiné à venir coopérer avec un disque de frein dans les freins à disques d'un véhicule automobile comme une voiture, un camion, un bus ou un wagon de chemin de fer, caractérisé en ce que le rapport entre l'épaisseur des parties de friction et le moyeu du volant est supérieur à 3, et de préférence 5.

5. Volant fabriqué selon le procédé des revendications 1 à 4. caractérisé en ce que le volant est coulé dans un moule en sable avec un métal en fusion qui contient de 0,010 à 0,025 de magnésium actif dissout, ou des quantités équivalentes d'un autre agent modifiant, et avec une épaisseur des parties formant moyeu du volant comprise entre 4 et 8 mm et une épaisseur de 25 à 35 mm dans les parties extérieures du volant qui ont des surfaces destinées à venir en contact avec des disques d'embrayage.

FIG.1

FIG. 2

FIG. 3